# EUROPEAN PATENT APPLICATION

(11) **EP 4 429 386 A1**
(43) Date of publication of application: **11.09.2024**
(21) Application number: 21962029.1
(22) Date of filing: 01.11.2021
(51) Int. Cl.: H04W 74/08, H04W 72/04

(54) **RANDOM ACCESS METHOD AND APPARATUS, AND COMMUNICATION APPARATUS AND COMPUTER-READABLE STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Gunzelmann, Rainer
(86) International application number: PCT/CN2021/127997
(87) International publication number: WO 2023/070679

(57) **Abstract**

The present disclosure relates to a random access method. The method comprises: sending a MsgA to a base station; receiving a random access response (RAR) sent by the base station; and in response to the RAR being a fallback random access response (fallback RAR), re-initiating random access or sending a Msg3 according to an indication of the base station. In the present disclosure, after a RedCap terminal sends a MsgA to a base station, and if an RAR sent by the base station has been received and it is determined that the received RAR is a fallback RAR, random access may be directly re-initiated, and a Msg3 may also be sent according to an indication of the base station. Since it is difficult for a base station to determine to configure a terminal to send a Msg3 on a first initial UL BWP or to send the Msg3 on a second initial UL BWP, which may result in a resource configured for the terminal to send the Msg3 being inappropriate, the terminal directly re-initiating random access can avoid a communication problem caused by sending the Msg3 on the inappropriate resource, e.g. avoiding a resource conflict.

## Description

### FIELD

The present disclosure relates to the technical field of communication, and more particularly, to a random access method, a random access apparatus, a communication device, and a computer-readable storage medium.

### BACKGROUND

With the development of the communication technology, in order to adapt to new communication scenarios, a reduced capability terminal is provided, which is called a RedCap terminal for short, and may also be referred to as an NR-lite terminal. This kind of terminal generally needs to meet performance requirements such as like low cost, low complexity, a certain degree of enhanced coverage, power saving, etc.

Due to certain differences between RedCap terminals and non-RedCap terminals, when accessing a network, in order to enable the network to determine the type of the terminal accessed, the RedCap terminal may carry information indicating the type of itself when initiating a random access. For example, when initiating a two-step random access, a terminal may perform an early indication through a physical uplink shared channel (PUSCH) in a random access message MsgA, to indicate whether the terminal initiating the random access is a RedCap terminal.

If a base station does not correctly demodulate the PUSCH in the MsgA, it can send a fallback random access response (fallback RAR) carrying configuration information to the terminal, so that the terminal sends a random access message Msg3 to the base station according to the configuration information. The Msg3 is a third message in a four-step random access process, and the content carried therein is the same as or similar to the PUSCH in the MsgA. However, in some scenarios, the base station cannot determine how to configure the terminal to send the Msg3.

### SUMMARY

In view of the above, embodiments of the present disclosure provide a random access method, a random access apparatus, a communication device, and a computer-readable storage medium to solve technical problems in the related art.

According to a first aspect of embodiments of the present disclosure, there is provided a random access method, which is performed by a first type of terminal. The first type of terminal is configured to carry terminal type indication information in a physical uplink shared channel (PUSCH) of a random access message MsgA. The method includes: sending the MsgA to a base station; receiving a random access response (RAR) sent by the base station; and re-initiating a random access or sending a Msg3 according to an indication from the base station, in response to the RAR being a fallback random access response (fallback RAR).

According to a second aspect of embodiments of the present disclosure, there is provided a random access method, which is performed by a base station. The method includes: receiving a MsgA sent by a first type of terminal; sending a random access response (RAR) to the terminal, the RAR being a fallback random access response (fallback RAR); and receiving a random access re-initiated by the terminal or receiving a Msg3 sent by the terminal.

According to a third aspect of embodiments of the present disclosure, there is provided a random access apparatus, which is applicable to a first type of terminal, and the first type of terminal is configured to carry terminal type indication information in a physical uplink shared channel (PUSCH) of a random access message MsgA. The random access apparatus includes: one or more processors configured to: send the MsgA to a base station; receive a random access response (RAR) sent by the base station; and re-initiate a random access or send a Msg3 according to an indication from the base station, in response to the RAR being a fallback random access response (fallback RAR).

According to a fourth aspect of embodiments of the present disclosure, there is provided a random access apparatus, which is applicable to a base station. The random access apparatus includes: one or more processors configured to: receive a MsgA sent by a first type of terminal; send a random access response (RAR) to the terminal, the RAR being a fallback random access response (fallback RAR); and receive a random access re-initiated by the terminal or receive a Msg3 sent by the terminal.

According to a fifth aspect of embodiments of the present disclosure, there is provided a communication device, which includes: a processor; and a memory for storing a computer program. When the computer program is executed by the processor, the random access method performed by the first type of terminal as described in any embodiment above is implemented.

According to a sixth aspect of embodiments of the present disclosure, there is provided a communication device, which includes: a processor; and a memory for storing a computer program. When the computer program is executed by the processor, the random access method performed by the base station as described in any embodiment above is implemented.

According to a seventh aspect of embodiments of the present disclosure, there is provided a computer-readable storage medium for storing a computer program that, when executed by a processor, causes steps in the random access method performed by the first type of terminal as described in any embodiment above to be implemented.

According to an eighth aspect of embodiments of the present disclosure, there is provided a computer-readable storage medium for storing a computer program that, when executed by a processor, causes steps in the random access method performed by the base station as described in any embodiment above to be implemented.

According to embodiments of the present disclosure, after the RedCap terminal sends the MsgA to the base station, if it receives the RAR sent by the base station and determines that the RAR received is the fallback RAR, it can directly re-initiate the random access in an embodiment, and in another embodiment, it can send the Msg3 according to an indication from the base station.

Since it is difficult for the base station to determine whether to configure the first initial UL BWP or the second initial UL BWP for the terminal to send the Msg3, the resource configured for the terminal to send the Msg3 may be inappropriate. In this case, the terminal directly re-initiates the random access, which can avoid the communication problem caused by sending the Msg3 with the inappropriate resource, such as avoiding resource conflicts.

### BRIEF DESCRIPTION OF THE DRAWINGS

In order to illustrate technical solutions in embodiments of the present disclosure more clearly, accompanying drawings to be used in the description of embodiments will be briefly introduced below. Apparently, the drawings in the following description only show some embodiments of the present disclosure. For those ordinarily skilled in the art, other drawings may also be obtained according to these drawings without any creative effort.
FIG. 1 is a schematic flowchart showing a random access method according to embodiments of the present disclosure.
FIG. 2 is a schematic flowchart showing another random access method according to embodiments of the present disclosure.
FIG. 3 is a schematic flow chart showing yet another random access method according to embodiments of the present disclosure.
FIG. 4 is a schematic flowchart showing a random access method according to embodiments of the present disclosure.
FIG. 5 is a schematic flowchart showing another random access method according to embodiments of the present disclosure.
FIG. 6 is a schematic flowchart showing yet another random access method according to embodiments of the present disclosure.
FIG. 7 is a schematic block diagram showing a device for a random access according to embodiments of the present disclosure.
FIG. 8 is a schematic block diagram showing a device for a random access according to embodiments of the present disclosure.

### DETAILED DESCRIPTION

Technical solutions in embodiments of the present disclosure will be described clearly and thoroughly below with reference to accompanying drawings in embodiments of the present disclosure. Apparently, the embodiments described herein are only some embodiments, rather than all embodiments of the present disclosure. All other embodiments obtained by those ordinarily skilled in the art based on embodiments described herein without creative labors shall belong to the protection scope of the present disclosure.

Terms used in embodiments of the present disclosure are only for the purpose of describing specific embodiments, and not intended to limit embodiments of the present disclosure. As used in embodiments of the present disclosure and the appended claims, "a/an" and "the" in a singular form are intended to include plural forms, unless clearly indicated in the context otherwise. It also should be understood that, the term "and/or" used herein represents and includes any or all possible combinations of one or more associated items listed.

It should be understood that even though terms such as "first," "second" and "third" may be used in embodiments of the present disclosure for describing various information, these information should not be limited by these terms. These terms are only used for distinguishing information of the same type from each other. For example, first information may also be referred to as second information, and similarly, second information may also be referred to as first information, without departing from the scope of embodiments of the present disclosure. Depending on the context, the term "if' as used herein may be construed as "when", "upon" or "in response to determining".

For the purposes of brevity and ease of understanding, terms "greater than" or "less than", "higher than" or "lower than" are used herein for indicating a size relationship. However, it may be understood for a person skilled in the art that the term "greater than" also covers a meaning of "greater than or equal to", the term "less than" also covers a meaning of "less than or equal to"; the term "higher than" also covers a meaning of "higher than or equal to", and the term "lower than" also covers a meaning of "lower than or equal to".

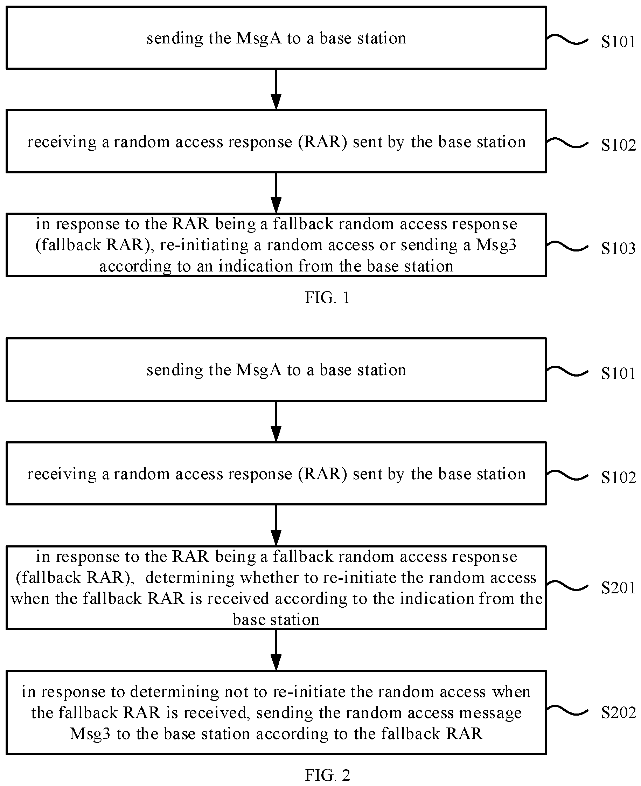

FIG. 1 is a schematic flowchart showing a random access method according to embodiments of the present disclosure. The random access method shown in these embodiments may be performed by a first type of terminal, and the first type of terminal is configured to carry terminal type indication information in a physical uplink shared channel (PUSCH) of a random access message MsgA, and can communicate with a base station. The terminal includes, but is not limited to, communication devices, like a mobile phone, a tablet computer, a wearable device, a sensor, or an Internet of Things device. The base station includes, but is not limited to, base stations in communication systems, such as a 4G base station, a 5G base station, or a 6G base station.

As shown in FIG. 1, the initiation of the random access method may include the following steps.

In step S101, a random access message MsgA is sent to a base station.

In step S102, a random access response (RAR) sent by the base station is received.

In step S103, a random access is re-initiated or a Msg3 is sent according to an indication from the base station, in response to the RAR being a fallback random access response (fallback RAR).

In an embodiment, the terminal may initiate a random access, such as a two-step random access or a four-step random access, to the base station to access the base station.

In a four-step random access process, the random access message MsgA is a first message Msg1. That is, the terminal first sends the random access message Msg1 to the terminal, and the random access message Msg1 carries a physical random access channel (PRACH) preamble.

After detecting the preamble, the base station sends a random access response (RAR) to the terminal, and the random access response (RAR) may also be called a second message Msg2. The RAR may carry an identifier (ID) of the preamble detected, a timing advance related command, and a temporary cell-radio network temporary identifier (C-RNTI, also called TC-RNTI), and may also carry resource allocation information, and the resource allocation information is used to indicate a resource for the terminal to send a random access message Msg3.

After receiving the RAR, the terminal may send the third message Msg3 to the base station. The Msg3 is mainly related to the PUSCH, and specific content carried in it is not fixed and depends on actual scenes.

After receiving the Msg3, the base station uses a contention resolution identity ID to send a contention resolution message to the terminal, and the contention resolution message may be called a fourth message Msg4.

After receiving the Msg4, the terminal acquires the contention resolution identity ID therein, and sends an acknowledgement message to the base station on a physical uplink control channel (PUCCH) to complete the four-step random access process.

It can be seen that the four-step access process requires at least two cycles of round-trip communications between the terminal and the base station, which will increase the latency of the access process to a certain extent, and generate additional signaling overhead. Therefore, in some cases, these problems can be alleviated by the two-step random access.

In a two-step random access process, the terminal sends a random access message MsgA to the base station. The MsgA is composed of a PRACH preamble and a PUSCH, and equivalent to the Msg1 and Msg3 in the four-step random access process. The MsgA may be transmitted in a PRACH occasion (PO) for transmitting the Msg1 in the four-step random access process, or may be transmitted in a separate PO, such as a PO dedicated to the two-step random access.

After receiving the MsgA, the base station sends a response message MsgB to the terminal. The response message MsgB includes a random access response and a contention resolution message, and is equivalent to the Msg2 and Msg4 in the four-step random access process.

It can be seen that the two-step random access process can reduce interactions between the base station and the terminal in the access process, which is beneficial to reducing the latency of the access process and saving the signaling overhead. For example, when the terminal communicates with the base station in an unauthorized frequency band, since the two-step random access process requires fewer interactions, it is beneficial to reducing the number of Listen Before Talk (LBT) attempts in the unauthorized frequency band.

In the two-step random access process, after the terminal sends the random access message MsgA, there exist three cases with respect to receiving the response message MsgB sent by the base station as follows.

In case 1, the base station does not detect the PRACH preamble in the MsgA, and thus does not send a response to the terminal, and therefore does not send the MsgB to the terminal. The terminal does not receive the MsgB after waiting, and then may resend the MsgA or fall back to the four-step random access process to send the Msg1.

In case 2, the base station detects the PRACH preamble in the MsgA, but fails to correctly decode the PUSCH in the MsgA, then it may send a fallback RAR to the terminal. The fallback RAR carries at least the resource allocation information, such as an uplink grant (UL grant), to indicate a resource for the terminal to transmit the Msg3. After receiving the fallback RAR, the terminal may send the Msg3 according to the resource indicated, which is equivalent to falling back to the four-step random access process.

In case 3, the base station detects the PRACH preamble in the MsgA and correctly decodes the PUSCH in the MsgA, and may return the MsgB to the terminal. The MsgB may carry a success random access response (success RAR), and the success RAR may carry the contention resolution identity ID, the C-RNTI, the timing advance command, etc. After receiving the MsgB, the terminal can determine that the two-step random access process has been successfully completed.

In an embodiment, the base station configures an initial UL BWP of the first type of terminal as a first initial UL BWP, and configures an initial UL BWP of a second type of terminal as a second initial UL BWP.

In an embodiment, the first type of terminal includes a reduced capability (RedCap) terminal, and the second type of terminal includes a non-RedCap terminal, which may also be called a legacy terminal or a Non-RedCap terminal.

For the RedCap terminal, in order to enable the network to determine the type of the terminal as soon as possible, when initiating the two-step random access process, the RedCap terminal can perform an early indication through the PUSCH in the MsgA. The indication may be an explicit indication or an implicit indication to indicate the type of the terminal initiating the random access, for example, to indicate whether the terminal initiating the random access is a RedCap terminal.

In addition, since both legacy terminals (i.e., non-reduced capability (Non-RedCap) terminals) and reduced capability (RedCap) terminals may exist in the network, in order to avoid conflicts between terminals of different types when initiating the random access, the base station may configure different initial UL bandwidth parts (BWPs) for the RedCap terminals and the non-RedCap terminals, so that the RedCap terminals and the non-RedCap terminals can use different initial UL BWPs to initiate the random access, respectively.

For the convenience of description below, the initial UL BWP configured for the RedCap terminal is called the first initial UL BWP, and the initial UL BWP configured for the non-RedCap terminal is called the second initial UL BWP. The first initial UL BWP is different from the second initial UL BWP. In all embodiments of the present disclosure, the difference between the first initial UL BWP and the second initial UL BWP may illustratively include one or more of the following situations:
a broadband width of the first initial UL BWP is different from that of the second initial UL BWP;
a starting position and/or an ending position of the first initial UL BWP is/are different from that of the second initial UL BWP.

In some possible implementations, the first initial UL BWP may have an overlapped part with the second initial UL BWP, the first initial UL BWP and the second initial UL BWP do not overlap at all, the first initial UL BWP is completely included in the second initial UL BWP, or the second initial UL BWP is completely included in the first initial UL BWP.

In a possible implementation, the initial UL BWP configured for the RedCap terminal is called the first initial UL BWP, which is exclusively used by the RedCap terminal. The initial UL BWP configured for the non-RedCap terminal is called the second initial UL BWP, which may be configured for the RedCap terminal to use, and may also be configured for the non-RedCap terminal to use.

In this case, for the above case 2 of the two-step random access, the base station does not correctly demodulate the PUSCH in the MsgA, and cannot correctly obtain the early indication, and thus cannot determine the type of the terminal initiating the random access, so that the base station cannot determine whether to configure the first initial UL BWP or the second initial UL BWP for the terminal to send the Msg3.

According to embodiments of the present disclosure, after the RedCap terminal sends the MsgA to the base station, if the RedCap terminal receives the RAR sent by the base station and determines that the RAR received is a fallback RAR, the RedCap terminal may directly re-initiate a random access in a possible embodiment, and in another possible embodiment, the RedCap terminal may send the Msg3 according to the indication from the base station.

Since it is difficult for the base station to determine whether to configure the first initial UL BWP or the second initial UL BWP for the terminal to send the Msg3, the resource configured for the terminal to send the Msg3 may be inappropriate. In this case, the terminal directly re-initiates the random access, which can avoid the communication problem caused by sending the Msg3 with the inappropriate resource, such as avoiding resource conflicts.

In addition, the base station may implement an indication to the terminal as needed, indicating the terminal to send the Msg3 when the terminal receives the fallback RAR, and such indication may be implemented for example in the fallback RAR, or may be implemented in system information or other downlink signalings in advance, or may be determined according to a communication standard. In this way, it is possible to flexibly control whether the terminal sends the Msg3 when receiving the fallback RAR.

In an embodiment, re-initiating the random access includes: re-initiating a two-step random access; or re-initiating a four-step random access.

In an embodiment, the random access re-initiated by the terminal may be a two-step random access or a four-step random access, which may be set as required.

In an embodiment, re-initiating the two-step random access includes: re-initiating the two-step random access with a physical random access channel (PRACH) resource dedicated to the two-step random access.

In an embodiment, re-initiating the four-step random access includes: re-initiating the four-step random access with a PRACH resource dedicated to the first type of terminal.

FIG. 2 is a schematic flowchart showing another random access method according to embodiments of the present disclosure. As shown in FIG. 2, before sending the Msg3 according to the indication from the base station, the method further includes the following steps.

In step S201, it is determined whether to re-initiate the random access when the fallback RAR is received according to the indication from the base station.

In an embodiment, the method also includes a step S202.

In step S202, the random access message Msg3 is sent to the base station according to the fallback RAR, in response to determining not to re-initiate the random access when the fallback RAR is received.

In an embodiment, the base station may implement an indication to the terminal as needed, indicating the terminal whether to re-initiate the random access when the terminal receives the fallback RAR. For example, the indication from the base station may be implemented in the fallback RAR or broadcast information. For example, the indication may be implemented in the fallback RAR, or may be implemented in the broadcast information (such as system information) in advance. The indication from the base station includes an explicit indication or an implicit indication. That is, the terminal may be indicated in an explicit manner, or may be indicated in an implicit manner.

The terminal can determine whether to re-initiate the random access when the fallback RAR is received according to the indication from the base station, and send the Msg3 to the base station when it is determined not to re-initiate the random access, and re-initiate a two-step random access or a four-step random access when it is determined to re-initiate the random access. In this way, the base station can flexibly control whether the terminal sends the Msg3 when the terminal receives the fallback RAR.

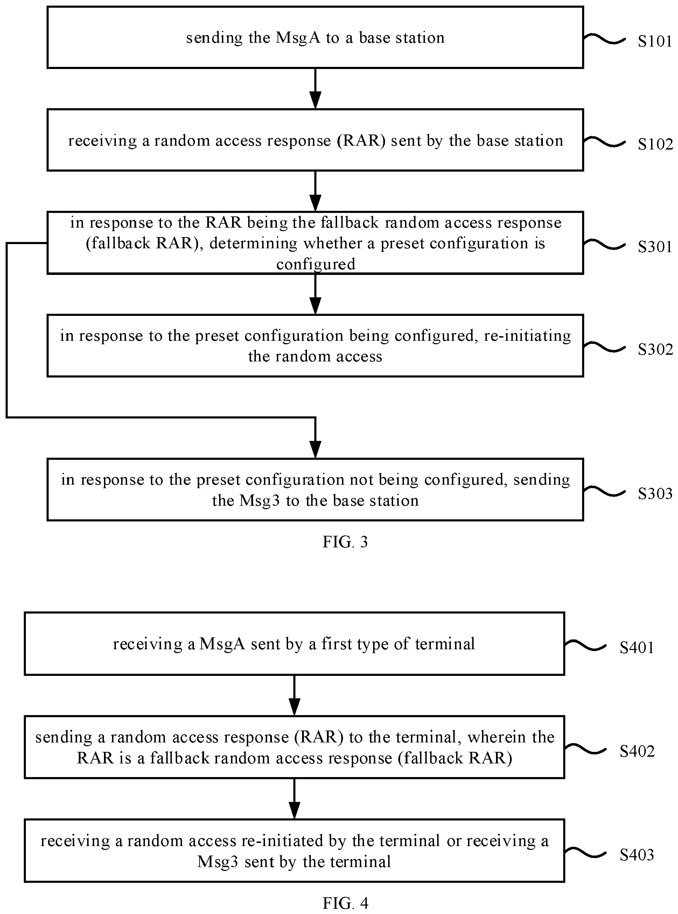

FIG. 3 is a schematic flowchart showing yet another random access method according to embodiments of the present disclosure. As shown in FIG. 3, re-initiating the random access in response to the RAR being the fallback random access response (fallback RAR) includes the following steps.

In step S301, it is determined whether a preset configuration is configured, in response to the RAR being the fallback random access response (fallback RAR).

In step S302, the random access is re-initiated, in response to determining that the terminal is configured with the preset configuration.

In another embodiment, the method includes the following steps.

In step S301, it is determined whether a preset configuration is configured, in response to the RAR being the fallback random access response (fallback RAR).

In step S303, the Msg3 is sent to the base station, in response to the preset configuration not being configured.

In yet another embodiment, the method also includes the following steps.

In step S301, it is determined whether a preset configuration is configured, in response to the RAR being the fallback random access response (fallback RAR).

In step S302, the random access is re-initiated, in response to determining that the terminal is configured with the preset configuration.

In step S301, it is determined whether a preset configuration is configured, in response to the RAR being the fallback random access response (fallback RAR).

In step S303, the Msg3 is sent to the base station, in response to the preset configuration not being configured.

In an embodiment, in addition to the above indication manners of the base station, the base station can also configure a preset configuration for the terminal, so that the terminal does not send the Msg3 based on the fallback RAR but re-initiates the random access when receiving the fallback RAR.

In embodiments of the present disclosure, the preset configuration may be configured by the base station to the terminal, may be determined by the terminal according to a communication protocol, or may be preset in the terminal.

In an embodiment, the preset configuration includes at least one of:
the initial uplink bandwidth part (initial UL BWP) configured for the first type of terminal being different from the initial UL BWP configured for the second type of terminal;
the initial UL BWP configured for the first type of terminal sharing a PRACH resource with the initial UL BWP configured for the second type of terminal;
the initial UL BWP configured for the second type of terminal being greater than a maximum bandwidth supported by the first type of terminal;
a mechanism in which the first type of terminal carries the terminal type indication information in the Msg3 being disabled; or
the first type of terminal transmitting the Msg3 based on an intra-slot frequency hopping scheme, and a frequency hopping amplitude in the intra-slot frequency hopping scheme being greater than a maximum bandwidth supported by the first type of terminal.

In the foregoing implementations, different preset configurations may be determined based on different manners, which will not be elaborated here.

In an embodiment, in a case where the first type of terminal determines that the initial UL BWP configured for the first type of terminal is different from the initial UL BWP configured for the second type of terminal, as it is difficult for the base station to accurately determine whether to configure the first initial UL BWP or the second initial UL BWP for the terminal to send the Msg3, resulting in that the resource configured for the terminal to send the Msg3 may be inappropriate, the terminal may not send the Msg3 based on the fallback RAR but re-initiate the random access when receiving the fallback RAR, which avoids the communication problem caused by sending the Msg3 with the inappropriate resource, such as avoids resource conflicts.

In an embodiment, in a case where the first type of terminal determines that the initial UL BWP configured for the first type of terminal shares the PRACH resource with the initial UL BWP configured for the second-type terminal, it is difficult for the base station to distinguish the two types of terminals according to BWPs in which the two types of terminals initiate the random access, and thus it is difficult for the base station to accurately determine whether to configure the first initial UL BWP or the second initial UL BWP for the terminal to send the Msg3, resulting in that the resource configured for the terminal to send the Msg3 may be inappropriate, the terminal may not send the Msg3 based on the fallback RAR but re-initiate the random access when receiving the fallback RAR, which avoids the communication problem caused by sending the Msg3 with the inappropriate resource, such as avoids resource conflicts.

It should be noted that even if the initial UL BWP configured for the first type of terminal does not share the PRACH resource with the initial UL BWP configured for the second type of terminal, the base station may not be able to distinguish the two types of terminals based on the BWP in which the two types of terminals initiate the random access, either.

In an embodiment, in a case where the first type of terminal determines that the initial UL BWP configured for the second type of terminal is greater than the maximum bandwidth (maximum UE BW) supported by the first type of terminal, even if the base station configures through the fallback RAR that the first type of terminal sends the Msg3 on the second initial UL BWP, since the second initial UL BWP is greater than the maximum bandwidth supported by the first type of terminal, the first type of terminal cannot send the Msg3 well on the second initial UL BWP, so the first type of terminal may not send the Msg3 based on the fallback RAR but re-initiate the random access, which avoids the problem caused by sending the Msg3 on an unsupported bandwidth.

In an embodiment, in a case where the first type of terminal determines that the mechanism in which the first type of terminal carries the terminal type indication information in the Msg3 is disabled, for example, the first type of terminal is the RedCap terminal, and the terminal type indication information is the early indication, the terminal cannot carry the terminal type indication information in the Msg3 sent according to the fallback RAR, but can carry the terminal type indication information in a random access process initiated subsequently, so the terminal may re-initiate the random access process, and carry the type indication information in the random access process and sent it to the base station.

In an embodiment, in a case where the first type of terminal determines that the first type of terminal transmits the Msg3 based on the intra-slot frequency hopping scheme, and the frequency hopping amplitude in the intra-slot frequency hopping scheme is greater than the maximum bandwidth supported by the first type of terminal, even if the base station configures through the fallback RAR that the first type of terminal transmits the Msg3 based on the intra-slot frequency hopping scheme, since the frequency hopping amplitude in the intra-slot frequency hopping scheme configured is greater than the maximum bandwidth supported by the first type of terminal, the first type of terminal cannot well support the frequency hopping transmission of this scheme, so the first type of terminal may not send the Msg3 based on the fallback RAR but re-initiate the random access, which avoids the problem caused by sending the Msg3 based on an unsupported frequency hopping scheme.

FIG. 4 is a schematic flowchart showing a random access method according to embodiments of the present disclosure. The random access method shown in these embodiments may be performed by a base station, the base station can communicate with a terminal, such as a first type of terminal, and the first type of terminal includes, for example, a reduced capability (RedCap) terminal. The terminal includes, but is not limited to, communication devices, like a mobile phone, a tablet computer, a wearable device, a sensor, or an Internet of Things device. The base station includes, but is not limited to, base stations in communication systems, such as a 4G base station, a 5G base station, or a 6G base station.

As shown in FIG. 4, the random access method includes the following steps.

In step S401, a MsgA sent by a first type of terminal is received.

In step S402, a random access response (RAR) is sent to the terminal, and the RAR is a fallback random access response (fallback RAR).

In step S403, a random access re-initiated by the terminal is received or a Msg3 sent by the terminal is received.

In a possible implementation, the base station sends the fallback RAR to the terminal in response to not correctly demodulating a PUSCH in the MsgA. In another possible implementation, the base station sends the fallback RAR to the terminal in response to not demodulating a corresponding preamble in the MsgA. Detailed description will be given later.

In an implementation, in response to the terminal being configured with a preset configuration and receiving the fallback RAR, the terminal re-initiates the random access. In another implementation, in response to the terminal not being configured with the preset configuration and receiving the fallback RAR, the terminal sends the Msg3 to the base station.

That is, the step 403 may be: receiving the random access re-initiated by the terminal. The random access is a random access re-initiated by the terminal in a case where the terminal is configured with the preset configuration and receives the fallback RAR.

Alternatively, the step 403 may be: receiving the Msg3 sent by the terminal. The Msg3 is a Msg3 sent by the terminal in a case where the terminal is not configured with the preset configuration and receives the fallback RAR.

In an embodiment, the terminal may initiate a random access, such as a two-step random access or a four-step random access, to the base station to access the base station.

In a four-step random access process, the terminal first sends a random access message Msg1 to the terminal, and the random access message Msg1 carries a physical random access channel (PRACH) preamble.

After detecting the preamble, the base station sends a random access response (RAR) to the terminal, and the random access response (RAR) may also be called a second message Msg2. The RAR may carry an identifier (ID) of the preamble detected, a timing advance related command, and a temporary cell-radio network temporary identifier (C-RNTI, also called TC-RNTI), and may also carry resource allocation information, and the resource allocation information is used to indicate a resource for the terminal to send a random access message Msg3.

After receiving the RAR, the terminal may send the Msg3 to the base station. The Msg3 is mainly related to the PUSCH, and specific content carried in it is not fixed and depends on actual scenes.

After receiving the Msg3, the base station uses a contention resolution identity ID to send a contention resolution message to the terminal, and the contention resolution message may be called a fourth message Msg4.

After receiving the Msg4, the terminal acquires the contention resolution identity ID therein, and sends an acknowledgement message to the base station on a physical uplink control channel (PUCCH) to complete the four-step random access process.

It can be seen that the four-step access process requires at least two cycles of round-trip communications between the terminal and the base station, which will increase the latency of the access process to a certain extent, and generate additional signaling overhead. Therefore, in some cases, these problems can be alleviated by the two-step random access.

In a two-step random access process, the terminal sends a random access message MsgAto the base station. The MsgAis composed of a PRACH preamble and a PUSCH, and equivalent to the Msg1 and Msg3 in the four-step random access process. The MsgA may be transmitted in a PRACH occasion (PO) for transmitting the Msg1 in the four-step random access process, or may be transmitted in a separate PO, such as a PO dedicated to the two-step random access.

After receiving the MsgA, the base station sends a MsgB to the terminal. The MsgB includes a random access response and a contention resolution message, and is equivalent to the Msg2 and Msg4 in the four-step random access process.

It can be seen that the two-step random access process can reduce interactions between the base station and the terminal in the access process, which is beneficial to reducing the latency of the access process and saving the signaling overhead. For example, when the terminal communicates with the base station in an unauthorized frequency band, since the two-step random access process requires fewer interactions, it is beneficial to reducing the number of Listen Before Talk (LBT) attempts in the unauthorized frequency band.

In the two-step random access process, after the terminal sends the MsgA, there exist three cases with respect to receiving the MsgB sent by the base station as follows.

In case 1, the base station does not detect the PRACH preamble in the MsgA, and thus does not send a response to the terminal, and therefore does not send the MsgB to the terminal. The terminal does not receive the MsgB after waiting, and then may resend the MsgA or fall back to the four-step random access process to send the Msg1.

In case 2, the base station detects the PRACH preamble in the MsgA, but fails to correctly decode the PUSCH in the MsgA, then it may send a fallback RAR to the terminal. The fallback RAR carries at least the resource allocation information, such as an uplink grant (UL grant), to indicate a resource for the terminal to transmit the Msg3. After receiving the fallback RAR, the terminal may send the Msg3 according to the resource indicated, which is equivalent to falling back to the four-step random access process.

In case 3, the base station detects the PRACH preamble in the MsgA and correctly decodes the PUSCH in the MsgA, and may return the MsgB to the terminal. The MsgB may carry a success random access response (success RAR), and the success RAR may carry the contention resolution identity ID, the C-RNTI, the timing advance command, etc. After receiving the MsgB, the terminal can determine that the two-step random access process has been successfully completed.

In an embodiment, the base station configures an initial UL BWP of the first type of terminal as a first initial UL BWP, and configures an initial UL BWP of a second type of terminal as a second initial UL BWP.

In an embodiment, the first type of terminal includes a reduced capability (RedCap) terminal, and the second type of terminal includes a non-RedCap terminal, which may also be called a legacy terminal or a Non-RedCap terminal.

For the RedCap terminal, in order to enable the network to determine the type of the terminal as soon as possible, when initiating the two-step random access process, the RedCap terminal can perform an early indication through the PUSCH in the MsgA. The indication may be an explicit indication or an implicit indication to indicate the type of the terminal initiating the random access, for example, to indicate whether the terminal initiating the random access is a RedCap terminal. In all embodiments of the present disclosure, the explicit indication may refer to an indication in a specific manner, such as through a specific indicator/character field/bit or the like. In all embodiments of the present disclosure, the implicit indication may refer to an indication in a coding manner or other manners.

In addition, since both legacy terminals (i.e., non-reduced capability (Non-RedCap) terminals) and reduced capability (RedCap) terminals may exist in the network, in order to avoid conflicts between terminals of different types when initiating the random access, the base station may configure different initial UL bandwidth parts (BWPs) for the RedCap terminals and the non-RedCap terminals, so that the RedCap terminals and the non-RedCap terminals can use different initial UL BWPs to initiate the random access, respectively.

For the convenience of description below, the initial UL BWP configured by the base station for the RedCap terminal is called the first initial UL BWP, and the initial UL BWP configured by the base station for the non-RedCap terminal is called the second initial UL BWP. The first initial UL BWP is different from the second initial UL BWP.

In this case, for the above case 2 of the two-step random access, the base station does not correctly demodulate the PUSCH in the MsgA, and cannot correctly obtain the early indication, and thus cannot determine the type of the terminal initiating the random access, so that the base station cannot determine whether to configure the first initial UL BWP or the second initial UL BWP for the terminal to send the Msg3.

According to embodiments of the present disclosure, after the RedCap terminal sends the MsgA to the base station, if the RedCap terminal receives the RAR sent by the base station and determines that the RAR received is a fallback RAR, the RedCap terminal may directly re-initiate a random access in an embodiment, and in another embodiment, the RedCap terminal may send the Msg3 according to the indication from the base station.

Since it is difficult for the base station to determine whether to configure the first initial UL BWP or the second initial UL BWP for the terminal to send the Msg3, the resource configured for the terminal to send the Msg3 may be inappropriate. In this case, the terminal directly re-initiates the random access, which can avoid the communication problem caused by sending the Msg3 with the inappropriate resource, such as avoiding resource conflicts, and the base station can receive the random access re-initiated by the terminal.

In addition, the base station may implement an indication to the terminal as needed, indicating the terminal to send the Msg3 when the terminal receives the fallback RAR, and such indication may be implemented for example in the fallback RAR, or may be implemented in system information in advance. In this way, it is possible to flexibly control whether the terminal sends the Msg3 when receiving the fallback RAR. In embodiments of the present disclosure, the base station may indicate the terminal to send the Msg3 when the terminal receives the fallback RAR, as needed, and such indication may be implemented for example in the fallback RAR, or may be implemented in the system information or other downlink signalings in advance, or may be determined according to a communication standard. In this way, it is possible to flexibly control whether the terminal sends the Msg3 when receiving the fallback RAR.

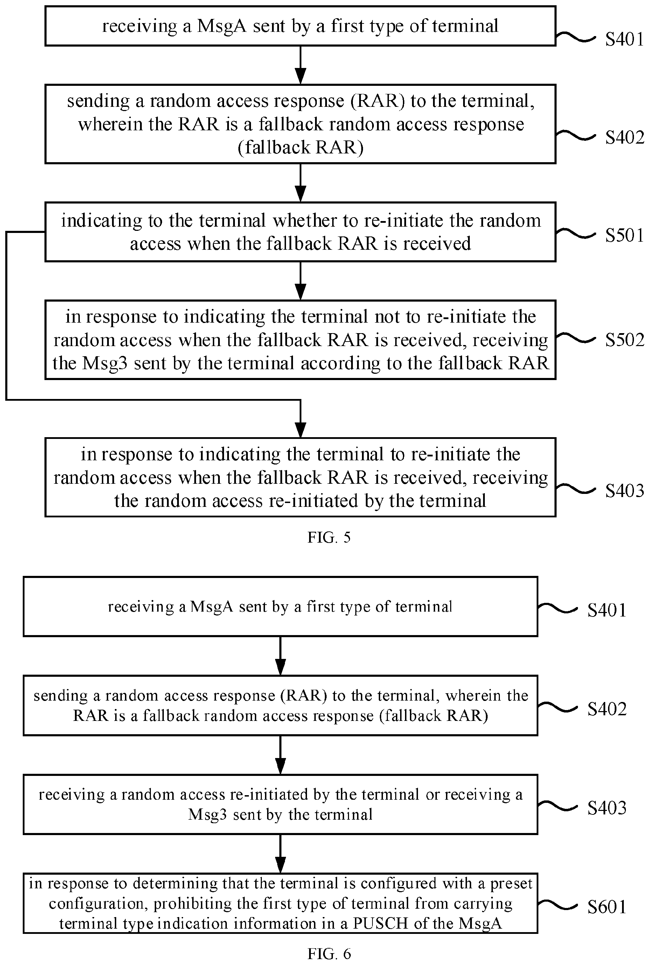

FIG. 5 is a schematic flowchart showing another random access method according to embodiments of the present disclosure. As shown in FIG. 5, the method further includes the following steps.

In step S501, the terminal is indicated whether to re-initiate the random access when the fallback RAR is received.

In an embodiment, receiving the Msg3 sent by the terminal includes a following step.

In step S502, the Msg3 sent by the terminal according to the fallback RAR is received, in response to indicating the terminal not to re-initiate the random access when the fallback RAR is received.

In an embodiment, the base station may implement an indication to the terminal as needed, indicating the terminal whether to re-initiate the random access when the terminal receives the fallback RAR. For example, the indication from the base station may be implemented in the fallback RAR or broadcast information. For example, the indication may be implemented in the fallback RAR, or may be implemented in the broadcast information (such as system information) in advance. The indication from the base station includes an explicit indication or an implicit indication. That is, the terminal may be indicated in an explicit manner, or may be indicated in an implicit manner.

The terminal can determine whether to re-initiate the random access when the fallback RAR is received according to the indication from the base station. When it is determined not to re-initiate the random access, the terminal may send the Msg3 to the base station, and the base station can receive the Msg3 sent by the terminal according to the fallback RAR. When it is determined to re-initiate the random access, a two-step random access or a four-step random access is re-initiated. In this way, the base station can flexibly control whether the terminal sends the Msg3 when receiving the fallback RAR.

FIG. 6 is a schematic flowchart showing yet another random access method according to embodiments of the present disclosure. As shown in FIG. 6, the method further includes a following step.

In step S601, the first type of terminal is prohibited from carrying terminal type indication information in a PUSCH of the MsgA, in response to determining that the terminal is configured with a preset configuration.

In embodiments of the present disclosure, the preset configuration may be configured by the base station to the terminal, may be determined by the terminal according to a communication protocol, or may be preset in the terminal.

In an embodiment, the preset configuration includes at least one of:
the initial UL BWP configured for the first type of terminal being different from the initial UL BWP configured for the second type of terminal;
the initial UL BWP configured for the first type of terminal sharing a PRACH resource with the initial UL BWP configured for the second type of terminal;
the initial UL BWP configured for the second type of terminal being greater than a maximum bandwidth supported by the first type of terminal;
a mechanism in which the first type of terminal carries the terminal type indication information in the Msg3 being disabled; or
the first type of terminal transmitting the Msg3 based on an intra-slot frequency hopping scheme, and a frequency hopping amplitude in the intra-slot frequency hopping scheme being greater than a maximum bandwidth supported by the first type of terminal.

In the foregoing implementations, different preset configurations may be determined based on different manners, which will not be elaborated here.

In an embodiment, in a case where the initial UL BWP configured for the first type of terminal is different from the initial UL BWP configured for the second type of terminal, it is difficult for the base station to accurately determine whether to configure the first initial UL BWP or the second initial UL BWP for the terminal to send the Msg3, resulting in that the resource configured for the terminal to send the Msg3 may be inappropriate. In this case, the first type of terminal may be prohibited from carrying the terminal type indication information in the PUSCH of the MsgA, for example, the RedCap terminal is prohibited from carrying the early indication indicating the type of the terminal in the PUSCH of the MsgA, so that the terminal will not carry the terminal type indication information in the PUSCH of the MsgA, and the base station does not need to determine the type of the terminal by analyzing the PUSCH of the MsgA, but determines the type of the terminal in other ways, so that after accurately determining the type of the terminal, the base station can accurately determine whether to configure the first initial UL BWP or the second initial UL BWP for the terminal to send the Msg3.

In an embodiment, in a case where the initial UL BWP configured for the first type of terminal shares the PRACH resource with the initial UL BWP configured for the second-type terminal, it is difficult for the base station to distinguish the two types of terminals according to BWPs in which the two types of terminals initiate the random access, and thus it is difficult for the base station to accurately determine whether to configure the first initial UL BWP or the second initial UL BWP for the terminal to send the Msg3, resulting in that the resource configured for the terminal to send the Msg3 may be inappropriate. In this case, the first type of terminal may be prohibited from carrying the terminal type indication information in the PUSCH of the MsgA, for example, the RedCap terminal is prohibited from carrying the early indication indicating the type of the terminal in the PUSCH of the MsgA, so that the terminal will not carry the terminal type indication information in the PUSCH of the MsgA, and the base station does not need to determine the type of the terminal by analyzing the PUSCH of the MsgA, but determines the type of the terminal in other ways, so that after accurately determining the type of the terminal, the base station can accurately determine whether to configure the first initial UL BWP or the second initial UL BWP for the terminal to send the Msg3.

It should be noted that even if the initial UL BWP configured for the first type of terminal does not share the PRACH resource with the initial UL BWP configured for the second type of terminal, the base station may not be able to distinguish the two types of terminals based on the BWP in which the two types of terminals initiate the random access, either.

In an embodiment, in a case where the initial UL BWP configured for the second type of terminal is greater than the maximum bandwidth (maximum UE BW) supported by the first type of terminal, even if the base station configures through the fallback RAR that the first type of terminal sends the Msg3 on the second initial UL BWP, since the second initial UL BWP is greater than the maximum bandwidth supported by the first type of terminal, the first type of terminal cannot send the Msg3 well on the second initial UL BWP. In this case, the first type of terminal may be prohibited from carrying the terminal type indication information in the PUSCH of the MsgA, for example, the RedCap terminal is prohibited from carrying the early indication indicating the type of the terminal in the PUSCH of the MsgA, so that the terminal will not carry the terminal type indication information in the PUSCH of the MsgA, and the base station does not need to determine the type of the terminal by analyzing the PUSCH of the MsgA, but determines the type of the terminal in other ways, so that after accurately determining the type of the terminal, the base station can accurately determine whether to configure the first initial UL BWP or the second initial UL BWP for the terminal to send the Msg3.

In an embodiment, in a case where it is determined that the mechanism in which the first type of terminal carries the terminal type indication information in the Msg3 is disabled, for example, the first type of terminal is the RedCap terminal, and the terminal type indication information is the early indication, the terminal cannot carry the terminal type indication information in the Msg3 sent according to the fallback RAR. In this case, the first type of terminal may be prohibited from carrying the terminal type indication information in the PUSCH of the MsgA, for example, the RedCap terminal is prohibited from carrying the early indication indicating the type of the terminal in the PUSCH of the MsgA, so that the terminal will not carry the terminal type indication information in the PUSCH of the MsgA, and the base station does not need to determine the type of the terminal by analyzing the PUSCH of the MsgA, but determines the type of the terminal in other ways, so that after accurately determining the type of the terminal, the base station can accurately determine whether to configure the first initial UL BWP or the second initial UL BWP for the terminal to send the Msg3.

In an embodiment, in a case where the first type of terminal determines that the first type of terminal transmits the Msg3 based on the intra-slot frequency hopping scheme, and the frequency hopping amplitude in the intra-slot frequency hopping scheme is greater than the maximum bandwidth supported by the first type of terminal, even if the base station configures through the fallback RAR that the first type of terminal transmits the Msg3 based on the intra-slot frequency hopping scheme, since the frequency hopping amplitude in the intra-slot frequency hopping scheme configured is greater than the maximum bandwidth supported by the first type of terminal, the first type of terminal cannot well support the frequency hopping transmission of this scheme. In this case, the first type of terminal may be prohibited from carrying the terminal type indication information in the PUSCH of the MsgA, for example, the RedCap terminal is prohibited from carrying the early indication indicating the type of the terminal in the PUSCH of the MsgA, so that the terminal will not carry the terminal type indication information in the PUSCH of the MsgA, and the base station does not need to determine the type of the terminal by analyzing the PUSCH of the MsgA, but determines the type of the terminal in other ways, so that after accurately determining the type of the terminal, the base station can accurately determine whether to configure the first initial UL BWP or the second initial UL BWP for the terminal to send the Msg3.

Corresponding to the foregoing embodiments of the random access method, the present disclosure also provides embodiments of a random access apparatus.

Embodiments of the present disclosure provide a random access apparatus, which is applicable to a first type of terminal. The first type of terminal is configured to carry terminal type indication information in a physical uplink shared channel (PUSCH) of a random access message MsgA, and can communicate with a base station. The terminal includes, but is not limited to, communication devices, like a mobile phone, a tablet computer, a wearable device, a sensor, or an Internet of Things device. The base station includes, but is not limited to, base stations in communication systems, such as a 4G base station, a 5G base station, or a 6G base station.

In an embodiment, the first type of terminal is configured to carry the terminal type indication information in the physical uplink shared channel (PUSCH) of the random access message MsgA, and the apparatus includes one or more processors configured to: send the MsgA to a base station; receive a random access response (RAR) sent by the base station; and re-initiate a random access or send a Msg3 according to an indication from the base station, in response to the RAR being a fallback random access response (fallback RAR).

In an embodiment, the processor is configured to: re-initiate a two-step random access; or re-initiate a four-step random access.

In an embodiment, the processor is configured to: re-initiate the two-step random access with a physical random access channel (PRACH) resource dedicated to the two-step random access.

In an embodiment, the processor is configured to: re-initiate the four-step random access with a PRACH resource dedicated to the first type of terminal.

In an embodiment, the processor is further configured to: determine whether to re-initiate the random access when the fallback RAR is received according to the indication from the base station.

In an embodiment, the processor is further configured to: send the random access message Msg3 to the base station according to the fallback RAR, in response to determining not to re-initiate the random access when the fallback RAR is received.

In an embodiment, the indication from the base station includes an explicit indication or an implicit indication.

In an embodiment, the indication from the base station is implemented in the fallback RAR or broadcast information.

In an embodiment, the processor is further configured to: determine whether a preset configuration is configured, in response to the RAR being the fallback random access response (fallback RAR); and re-initiate the random access, in response to the preset configuration being configured.

In an embodiment, the processor is further configured to: send the Msg3 to the base station, in response to the preset configuration not being configured.

In an embodiment, the preset configuration includes at least one of:
an initial uplink bandwidth part (initial UL BWP) configured for the first type of terminal being different from an initial UL BWP configured for a second type of terminal;
an initial UL BWP configured for the first type of terminal sharing a PRACH resource with an initial UL BWP configured for a second type of terminal;
an initial UL BWP configured for a second type of terminal being greater than a maximum bandwidth supported by the first type of terminal;
a mechanism in which the first type of terminal carries the terminal type indication information in the Msg3 being disabled; or
the first type of terminal transmitting the Msg3 based on an intra-slot frequency hopping scheme, and a frequency hopping amplitude in the intra-slot frequency hopping scheme being greater than a maximum bandwidth supported by the first type of terminal.

In an embodiment, the first type of terminal includes a non-reduced capability (RedCap) terminal, and the second type of terminal includes a RedCap terminal.

Embodiments of the present disclosure provide a random access apparatus, which is applicable to a base station. The base station may communicate with a terminal, such as a first type of terminal, and the first type of terminal includes, for example, a reduced capability (RedCap) terminal. The terminal includes, but is not limited to, communication devices, like a mobile phone, a tablet computer, a wearable device, a sensor, or an Internet of Things device. The base station includes, but is not limited to, base stations in communication systems, such as a 4G base station, a 5G base station, or a 6G base station.

In an embodiment, the random access apparatus includes one or more processors configured to: receive a MsgA sent by a first type of terminal; send a fallback RAR to the terminal, in response to not correctly demodulating a PUSCH in the MsgA; and receive a random access re-initiated by the terminal.

In an embodiment, the processor is further configured to: indicate to the terminal whether to re-initiate the random access when the fallback RAR is received.

In an embodiment, the processor is configured to: receive the Msg3 sent by the terminal according to the fallback RAR, in response to indicating to the terminal not to re-initiate the random access when the fallback RAR is received.

In an embodiment, the processor is further configured to: prohibit the first type of terminal from carrying terminal type indication information in a PUSCH of the MsgA, in response to the terminal being configured with a preset configuration.

In an embodiment, the preset configuration includes at least one of:
an initial UL BWP configured for the first type of terminal being different from an initial UL BWP configured for a second type of terminal;
an initial UL BWP configured for the first type of terminal sharing a PRACH resource with an initial UL BWP configured for a second type of terminal;
an initial UL BWP configured for a second type of terminal being greater than a maximum bandwidth supported by the first type of terminal;
a mechanism in which the first type of terminal carries the terminal type indication information in the Msg3 being disabled; or
the first type of terminal transmitting the Msg3 based on an intra-slot frequency hopping scheme, and a frequency hopping amplitude in the intra-slot frequency hopping scheme being greater than a maximum bandwidth supported by the first type of terminal.

In an embodiment, the first type of terminal includes a non-reduced capability (RedCap) terminal, and the second type of terminal includes a RedCap terminal.

With respect to the apparatuses in the above embodiments, the specific manners of individual modules therein for performing operations have been described in detail in the embodiments of related methods, which will not be elaborated here.

As for the apparatus embodiments, since they are substantially correspond to the method embodiments, for related parts, reference is made to the partial description of the method embodiments. The above-described apparatus embodiments are merely illustrative, in which modules described as separate components may be or may not be physically separated, and components displayed as modules may be or may not be physical modules, that is, they may be located at one place or distributed to a plurality of network modules. Some or all of the modules may be selected as required to achieve the objects of embodiments of the present disclosure, and they could be understood and implemented by those skilled in the art without creative efforts.

Embodiments of the present disclosure also provide a communication device, which includes: a processor; and a memory for storing a computer program. When the computer program is executed by the processor, the random access method performed by the first type of terminal as described in any embodiment above is implemented.

Embodiments of the present disclosure also provide a communication device, which includes: a processor; and a memory for storing a computer program. When the computer program is executed by the processor, the random access method performed by the base station as described in any embodiment above is implemented.

Embodiments of the present disclosure also provide a computer-readable storage medium for storing a computer program that, when executed by a processor, causes steps in the random access method performed by the first type of terminal as described in any embodiment above to be implemented.

Embodiments of the present disclosure also provide a computer-readable storage medium for storing a computer program that, when executed by a processor, causes steps in the random access method performed by the base station as described in any embodiment above to be implemented.

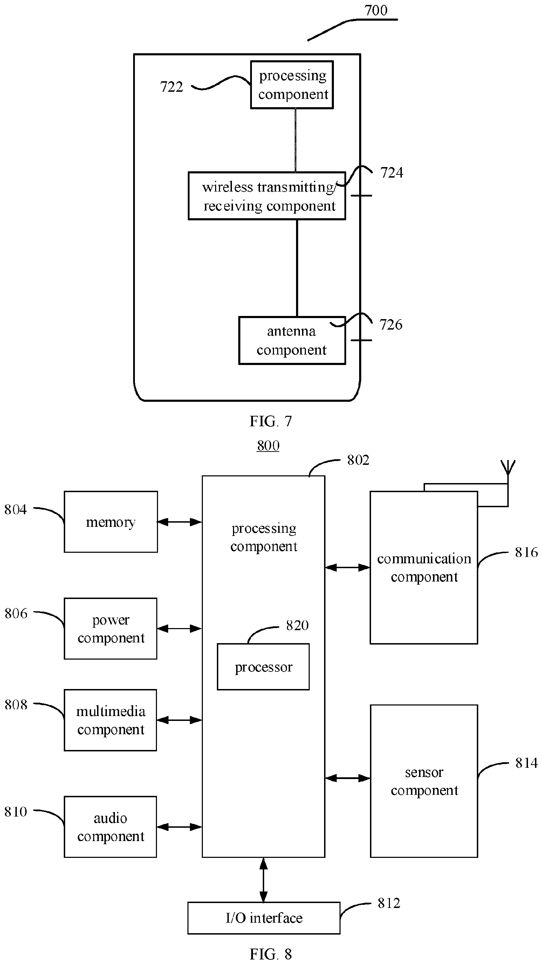

As shown in FIG. 7, FIG. 7 is a schematic block diagram showing a device 700 for a random access according to embodiments of the present disclosure. The device 700 may be provided as a base station. Referring to FIG. 7, the device 700 includes a processing component 722, a wireless transmitting/receiving component 724, an antenna component 726, and a signal processing part specific to a wireless interface. The processing component 722 may further include one or more processors. One of the processors in the processing component 722 may be configured to implement the random access method applicable to the base station as described in any embodiment above.

FIG. 8 is a schematic block diagram showing a device 800 for a random access according to embodiments of the present disclosure. For example, the device 800 may be a mobile phone, a computer, a digital broadcast terminal, a messaging device, a gaming console, a tablet, a medical device, an exercise equipment, a personal digital assistant, and the like.

Referring to FIG. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or some of the steps in the above-described random access method applicable to the first type of terminal as described in any embodiment above. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wireless, between the device 800 and other devices. The device 800 can access a wireless network based on a communication standard, such as WiFi, 2G, 3G, 4G LTE, 5G NR or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the random access method applicable to the first type of terminal as described in any embodiment above.

In illustrative embodiments, there is also provided a non-transitory computer-readable storage medium including instructions, such as included in the memory 804, executable by the processor 820 in the device 800, for performing the random access method applicable to the first type of terminal as described in any embodiment above. For example, the non-transitory computer-readable storage medium may be a ROM, a RAM, a CD-ROM, a magnetic tape, a floppy disc, an optical data storage device, and the like.

Other embodiments of the present disclosure will be apparent to those skilled in the art from consideration of the specification and practice of the present disclosure disclosed here. This present disclosure is intended to cover any variations, uses, or adaptations of the present disclosure following the general principles thereof and including such departures from the present disclosure as come within known or customary practice in the art. It is intended that the specification and embodiments be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

It is to be noted that in this context, relational terms such as first and second are used solely to distinguish one entity or operation from another entity or operation, it does not necessarily require or imply any such actual relationship or sequence between these entities or operations. The term "include", "comprise" or any other variation thereof is intended to cover a non-exclusive inclusion, so that a process, method, article or device that includes a series of elements does not only include those elements, but also includes other elements that are not explicitly listed, or also includes elements inherent in such a process, method, article or device. Without further restrictions, an element defined by the statement "including a..." does not exclude the existence of another identical element in the process, method, article or device that includes the element.

The methods and apparatuses provided by embodiments of the present disclosure have been described in detail above, and specific examples are used to illustrate the principle and implementations of the present disclosure. The description of the above embodiments is only used to help understand the methods and core ideas of the present disclosure. At the same time, for those skilled in the art, some changes may be made in the specific implementations and application scope according to the idea of the present disclosure. In summary, the content of the specification should not be construed as a limitation on the present disclosure.

## Claims

1. A random access method, performed by a first type of terminal configured to carry terminal type indication information in a physical uplink shared channel (PUSCH) of a random access message MsgA, comprising:
sending the MsgA to a base station;
receiving a random access response (RAR) sent by the base station; and
re-initiating a random access or sending a Msg3 according to an indication from the base station, in response to the RAR being a fallback random access response (fallback RAR).

2. The method according to claim 1, wherein re-initiating the random access comprises:
re-initiating a two-step random access; or
re-initiating a four-step random access.

3. The method according to claim 1, wherein re-initiating the two-step random access comprises:
re-initiating the two-step random access with a physical random access channel (PRACH) resource dedicated to the two-step random access.

4. The method according to claim 1, wherein re-initiating the four-step random access comprises:
re-initiating the four-step random access with a physical random access channel (PRACH) resource dedicated to the first type of terminal.

5. The method according to any one of claims 1 to 4, wherein before sending the Msg3 according to the indication from the base station, the method further comprises:
determining whether to re-initiate the random access when the fallback RAR is received according to the indication from the base station.

6. The method according to claim 5, further comprising: in response to determining not to re-initiate the random access when the fallback RAR is received, sending the random access message Msg3 to the base station according to the fallback RAR.

7. The method according to claim 5, wherein the indication from the base station comprises an explicit indication or an implicit indication.

8. The method according to claim 5, wherein the indication from the base station is implemented in the fallback RAR or broadcast information.

9. The method according to any one of claims 1 to 4, wherein re-initiating the random access in response to the RAR being the fallback random access response (fallback RAR) comprises:
in response to the RAR being the fallback random access response (fallback RAR), determining whether a preset configuration is configured; and
in response to the preset configuration being configured, re-initiating the random access.

10. The method according to claim 9, further comprising:
in response to the preset configuration not being configured, sending the Msg3 to the base station.

11. The method according to claim 9, wherein the preset configuration comprises at least one of:
an initial uplink bandwidth part (initial UL BWP) configured for the first type of terminal being different from an initial UL BWP configured for a second type of terminal;
an initial UL BWP configured for the first type of terminal sharing a PRACH resource with an initial UL BWP configured for a second type of terminal;
an initial UL BWP configured for a second type of terminal being greater than a maximum bandwidth supported by the first type of terminal;
a mechanism in which the first type of terminal carries the terminal type indication information in the Msg3 being disabled; or
the first type of terminal transmitting the Msg3 based on an intra-slot frequency hopping scheme, and a frequency hopping amplitude in the intra-slot frequency hopping scheme being greater than a maximum bandwidth supported by the first type of terminal.

12. The method according to claim 11, wherein the first type of terminal comprises a non-reduced capability (RedCap) terminal, and the second type of terminal comprises a RedCap terminal.

13. A random access method, performed by a base station, comprising:
receiving a MsgA sent by a first type of terminal;
sending a random access response (RAR) to the terminal, wherein the RAR is a fallback random access response (fallback RAR); and
receiving a random access re-initiated by the terminal or receiving a Msg3 sent by the terminal.

14. The method according to claim 13, further comprising: indicating to the terminal whether to re-initiate the random access when the fallback RAR is received.

15. The method according to claim 13, wherein receiving the Msg3 sent by the terminal comprises:
in response to determining that the terminal does not re-initiate the random access when the fallback RAR is received, receiving the Msg3 sent by the terminal according to the fallback RAR.

16. The method according to any one of claims 13 to 15, further comprising:
in response to determining that the terminal is configured with a preset configuration, prohibiting the first type of terminal from carrying terminal type indication information in a PUSCH of the MsgA.

17. The method according to claim 16, wherein the preset configuration comprises at least one of:
an initial UL BWP configured for the first type of terminal being different from an initial UL BWP configured for a second type of terminal;
an initial UL BWP configured for the first type of terminal sharing a PRACH resource with an initial UL BWP configured for a second type of terminal;
an initial UL BWP configured for a second type of terminal being greater than a maximum bandwidth supported by the first type of terminal;
a mechanism in which the first type of terminal carries the terminal type indication information in the Msg3 being disabled; or
the first type of terminal transmitting the Msg3 based on an intra-slot frequency hopping scheme, and a frequency hopping amplitude in the intra-slot frequency hopping scheme being greater than a maximum bandwidth supported by the first type of terminal.

18. The method according to claim 17, wherein the first type of terminal comprises a non-reduced capability (RedCap) terminal, and the second type of terminal comprises a RedCap terminal.

19. A random access apparatus, applicable to a first type of terminal configured to carry terminal type indication information in a physical uplink shared channel (PUSCH) of a random access message MsgA, comprising:
one or more processors configured to:
send the MsgA to a base station;
receive a random access response (RAR) sent by the base station; and
re-initiate a random access or send a Msg3 according to an indication from the base station, in response to the RAR being a fallback random access response (fallback RAR).

20. A random access apparatus, applicable to a base station, comprising:
one or more processors configured to:
receive a MsgA sent by a first type of terminal;
send a random access response (RAR) to the terminal, wherein the RAR is a fallback random access response (fallback RAR); and
receive a random access re-initiated by the terminal or receiving a Msg3 sent by the terminal.

21. A communication device, comprising:
a processor; and
a memory for storing a computer program;
wherein when the computer program is executed by the processor, the random access method according to any one of claims 1 to 12 is implemented.

22. A communication device, comprising:
a processor; and
a memory for storing a computer program;
wherein when the computer program is executed by the processor, the random access method according to any one of claims 12 to 18 is implemented.

23. A computer-readable storage medium for storing a computer program that, when executed by a processor, causes steps in the random access method according to any one of claims 1 to 12 to be implemented.

24. A computer-readable storage medium for storing a computer program that, when executed by a processor, causes steps in the random access method according to any one of claims 12 to 18 to be implemented.
